# EUROPÄISCHE PATENTSCHRIFT

(11) **EP 1 686 045 B1**
(45) Veröffentlichungstag und Bekanntmachung des Hinweises auf die Patenterteilung: **09.04.2008**
(21) Anmeldenummer: 05025267.5
(22) Anmeldetag: 18.11.2005
(51) Int. Cl.: B62D 33/06, B60G 21/10

(54) **Fahrbare Arbeitsmaschine**
Self-propelled working machine
Appareil de travail mobile

(30) Priorität: 27.01.2005 DE 102005003833
(43) Veröffentlichungstag der Anmeldung: 02.08.2006
(73) Patentinhaber: Hydac System GmbH, 66280 Sulzbach/Saar (DE)
(72) Erfinder: Anton, Marc, 66787 Wadgassen (DE)
(74) Vertreter: Bartels & Partner

(56) Entgegenhaltungen:
- EP-A1- 0 495 442
- EP-A1- 0 994 009
- US-A- 4 483 409
- US-A1- 2005 082 127
- US-A1- 2005 230 888

## Beschreibung

Die Erfindung betrifft eine fahrbare Arbeitsmaschine, wie einen Traktor oder dergleichen, mit einer Fahrerkabine von der aus die Arbeitsmaschine ansteuerbar ist. Neben dem Einsatz solcher Arbeitsmaschinen im Bereich der Landwirtschaft werden diese regelmäßig auch im Straßen- und Bergbau eingesetzt, wobei die dahingehende Aufzählung nicht abschließend ist.

Insbesondere im rauhen Arbeitsalltag dahingehender Arbeitsmaschinen ist die Fahrerkabine der Bedienperson über eine übliche Fahrwerkfederung nebst Dämpfung vor den größten Beanspruchungen geschützt; dennoch reichen die bekannten Maßnahmen häufig nicht aus, um von erhöhten Anforderungen an einen Bedienkomfort ausgehen zu können, was letztendlich doch zu hohen Belastungen bei der Bedienperson führt, die die Bediensicherheit beeinträchtigt. Insbesondere auf unebenem Untergrund, wie er beispielhaft durch eine Ackeroberfläche oder ein Abraumgebiet im Bergbau gegeben ist, kommt es zwangsläufig selbst bei gefedertem Fahrwerk zu Neigungen der Kabine in wechselnden Richtungen, was sich für die jeweilige Bedienperson als ergonomisch ungünstig erweist. Auch kann häufig aufgrund der Wankbewegungen der Kabine das Arbeits- oder Tätigkeitsfeld nicht immer mit Sicherheit eingesehen werden, was die Effizienz der Arbeitsmaschine beeinträchtigt.

Zwar ist in der WO 99/24309 A1 bereits vorgeschlagen worden bei einer fahrbaren Arbeitsmaschine die Fahrerkabine mittels Aktuatoren in Form von Arbeitszylindern gegenüber einem Fahrwerk hydraulisch derart zu entkoppeln, dass insbesondere in das Fahrwerk eingeleitete Vibrationen gedämpft sind, wobei über eine Vielzahl an Sensoren nicht nur der Fahrzustand der Arbeitsmaschine im Gelände erfasst wird, sondern weitere die Fahrwerkfederung beeinflussende Komponenten wie eingesetzte Arbeitsgerätschaften, Lenkeinschlag, Fahrgeschwindigkeiten, Vierradantrieb und dergleichen mehr. Die teilweise optisch oder mit Radarstrahlen angelegten Sensoren sind empfindlich und für den rauhen Arbeitsalltag dahingehender Arbeitsmaschinen störanfällig und insoweit nur bedingt geeignet. Ferner erhöhen die derart eingesetzten Sensoren die Kosten für eine dahingehende Fahrwerkfederung.

Durch die FR 2 653 733 A1 ist eine Fahrwerkfederung für eine Arbeitsmaschine bekannt, deren Fahrerkabine sich auf einem kastenförmigen Stabtragwerk abstützt, das wiederum endseitig über je vier übliche Federungszylinder am Fahrwerk abgestützt ist. Ferner werden zwischen Paaren an Fahrwerkszylindern frei bewegbare Komponenten des Stabtragwerkes über einen Dämpfer angesteuert, der beidseitig wirkend über endseitig angelenkte Winkelschenkel auf diese bewegbaren Komponenten des Stabtragwerkes einwirkt. Die angesprochenen Dämpfungseinrichtungen erlauben dergestalt die Dämpfung der Fahrerkabine gegenüber einem Wankeinfluss und etwaige Nickbewegungen der Fahrerkabine quer zur Längsausrichtung des Stabtragwerkes werden über die Paare an Fahrwerkszylindern abgefangen. Die dahingehend bekannte Lösung baut groß auf und ist entsprechend schwer, was sich nachteilig auf die Effizienz der Arbeitsmaschine nebst ihren Betriebskosten auswirkt.

Durch die DE-OS 2 108 569 ist eine hydropneumatische Radaufhängung mit Querstabilisierung bei einem Kraftfahrzeug bekannt. Bei dieser bekannten Lösung ist an je einen hydropneumatischen Druckspeicher ein hydraulischer Arbeitszylinder angeschlossen, dessen mit einem Radlenker mechanisch verbundener Kolben als dreifach wirkender Differentialkolben ausgebildet ist. Entsprechende Arbeitskammern des jeweiligen Kraftzylinders sind für das gegenüberliegende Rad mittels zweier über Kreuz verlaufende Leitungen verbunden, an deren jeweils ein hydraulischer Druckspeicher mit Druckgaskissen angeschlossen ist. Mit der bekannten Lösung ist eine Radaufhängung mit Querstabilisierung realisiert, die es erlaubt die der Seitenneigung entgegenwirkende Kraft der Höhe des Schwerpunktes der Ladung über den Rädern des Fahrzeuges anzupassen und zwar unabhängig von dem Gewicht der Ladung und somit dem Federungsverhalten der Radaufhängung Mittels eines von Hand betätigbaren Stufenschalters läßt sich insoweit der Grad der benötigten Querstabilisierung vorgeben. Auch die dahingehende Lösung baut kompliziert auf und erlaubt aufgrund des Stufenschalters nur eingeschränkt eine ergonomisch sinnvolle Ausgestaltung der Gesamtfederung.

Das Dokument US4483409 beschreibt einen Traktor mit einer Fahrerkabine, die mittels Arbeitszylinder und Hydrospeicher gegenüber einem Fahrwerk hydraulisch gefedert ist, wobei ein Kolbenraum eines Zylinders mit dem Stangenraum eines anderen Zylinders und umgekehrt fluidführend verbunden ist. Zudem gibt es eine Niveauregelventileinrichtung zum Konstanthalten der Lage der Fahrerkabine; diese Einrichtung verbindet fluidführend den einen oder den anderen Zylinderkolbenraum mit einer Druckquelle.

Ausgehend von diesem Stand der Technik liegt der Erfindung die Aufgabe zugrunde, eine selbstfahrende Arbeitsmaschine mit Fahrerkabine unter Beibehalten ihrer sonstigen Vorteile derart weiter zu optimieren, dass sie wenig Bauraum einnimmt, kostengünstig in der Realisierung und im Betrieb ist sowie auch den erhöhten Anforderungen einer ergonomisch sinnvollen Ausgestaltung gerecht wird, Arbeitsabläufe verbessern hilft und darüber hinaus die Sicherheit erhöht. Eine dahingehende Aufgabe löst eine fahrbare Arbeitsmaschine mit den Merkmalen des Patentanspruches 1 in seiner Gesamtheit.

Dadurch, dass die fahrbare Arbeitsmaschine mit Fahrerkabine mittels Arbeitszylindern und Hydrospeichern gegenüber einem Fahrwerk der Maschine hydraulisch gefedert ist, wobei eine Schalteinrichtung in ihrer einen Schaltstellung den Kolbenraum eines Zylinders mit dem Stangenraum eines anderen Zylinders und umgekehrt fluidführend verbindet, und in ihrer anderen Schaltstellung eine fluidführende Verbindung zwischen dem Kolbenraum eines Zylinders mit seinem Stangenraum herstellt, besteht die Möglichkeit, die Fahrerkabine gegenüber dem Fahrwerk hydraulisch zu federn, wobei die Fahrerkabine ungewollt keine Wankbewegungen ausführt und im wesentlichen in ihrer gewünschten Position verbleibt. Unabhängig hiervon besteht die Möglichkeit, mit der genannten hydraulischen Federung nebst Schalteinrichtung für die Fahrerkabine diese in einem vorgebbaren Bereich zu neigen, um beispielsweise einen schwierig einsehbaren Arbeitsbereich besser visualisieren zu können. Auch im dahingehend geneigten Fall bleibt für die Fahrerkabine selbst die vorgesehene Federung nebst Dämpfung vollumfänglich erhalten, ohne dass die Kabine, beispielsweise bedingt durch die Art des Untergrundes, auf dem die Arbeitsmaschine fährt, zu Wankbewegungen angeregt wird.

Die erfindungsgemäße Lösung benötigt wenig Komponenten und ist somit bauraumsparend in der Ausführung. Ferner läßt sich die angesprochene Fahrwerksfederung kostengünstig realisieren und betreiben. Aufgrund der geringen Anzahl an Baukomponenten ist darüber hinaus die erfindungsgemäße Lösung wenig störanfällig und generiert insoweit geringe Wartungskosten.

Die erfindungsgemäße Lösung braucht nicht auf geschlossene Fahrerkabinen eingeschränkt zu sein; vielmehr eignet sich diese grundsätzlich auch für offene Lösungen, beispielsweise wenn die Bedienperson auf einer Art Plattform gegenüber dem eigentlichen Fahrwerk der Arbeitsmaschine ihre Arbeit ausführt.

Durch die Verschaltung der genannten Schalteinrichtung mit den einzelnen Zylindern ist eine Art Kreuzschaltung realisiert mit der Folge, dass die als Federungszylinder konzipierten Einzelzylinder synchron ein- oder ausfedern können, wobei die gefederte Kabine selbst wankstabilisiert ist. Der dahingehende Federungskomfort der Federungszylinder wird noch über die angeschlossenen Hydrospeicher in günstiger Weise mit unterstützt.

Bei einer bevorzugten Ausführungsform der erfindungsgemäßen fahrbaren Arbeitsmaschine ist vorgesehen, dass die Schalteinrichtung mindestens ein Ventil aufweist und an eine weitere Schalteinrichtung angeschlossen ist, die mindestens vier weitere Ventile aufweist, die paarweise zu Funktionsgruppen zusammengefaßt dem voneinander unabhängigen Ein- und Ausfahren der Arbeitszylinder dienen. Durch gruppenweises Betätigen der angesprochenen Ventile können die Arbeits- oder Federungszylinder unabhängig voneinander ein- und ausgefahren werden mit der Folge, dass auf diese Art und Weise die Kabine nicht nur in der Höhe gegenüber dem Fahrwerk einstellbar ist, sondern auch seitlich in vorgebbaren Richtungen geneigt werden kann, wobei in einer dann geneigten Neutralstellung die angesprochene Kreuzschaltung wieder hergestellt ist, mit der Folge einer Wankstabilisierung für die Kabinenfederung.

Vorzugsweise erfolgt die Erfassung der aktuellen Position von Arbeits- oder Federungszylinder sowie die Höhe und die Neigung der Kabine elektronisch mittels entsprechender Sensoren einer Steuereinrichtung (Controller). Es ist aber auch denkbar, dass die Bedienperson diese Einstellungen von sich aus ohne elektronische Unterstützung oder nur mit teilelektronischer Unterstützung vornimmt. Vorzugsweise ist die Steuereinrichtung für die einzelnen Schalteinrichtungen noch um weitere Sensoren ergänzt für Betriebgrößen wie Fahrgeschwindigkeit, Fahrbeschleunigungen, Lenkeinschlag, Last und Bodenbeschaffenheit. Die entsprechende Neigungsfeststellung kann um drei zueinander senkrechte Achsen erfolgen, in Form von zu erfassenden Nick-, Wank- und/oder Gierbewegungen, die sowohl von Seiten der Fahrerkabine aus als auch von Seiten des Fahrwerks aus auftreten können.

Weitere vorteilhafte Ausführungsformen der erfindungsgemäßen fahrbaren Arbeitsmaschine sind Gegenstand der sonstigen Unteransprüche.

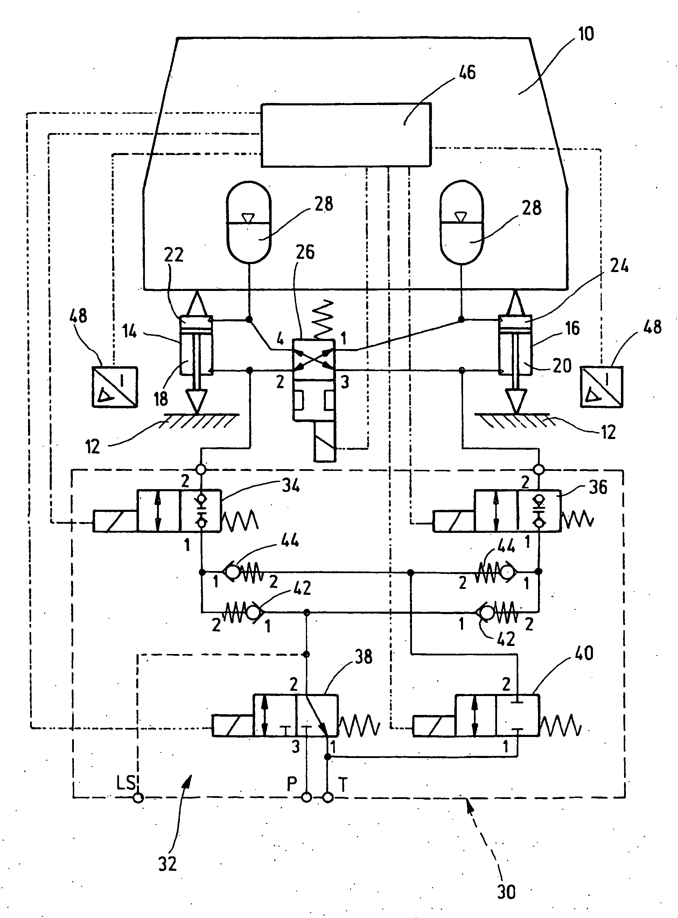

Im Folgenden wird anhand eines Ausführungsbeispieles nach der Zeichnung die erfindungsgemäße fahrbare Arbeitsmaschine von ihrer Grundkonzeption her, anhand eines hydraulischen und elektronischen Schaltplanes nach der einzigen Figur näher erläutert.

Die erfindungsgemäße Lösung ist anhand der prinzipiellen Schaltdarstellung nach der Figur aufgezeigt, wobei von den wesentlichen Elementen der Arbeitsmaschine nur die Fahrerkabine 10 aufgezeigt ist, sowie symbolisch das die Fahrerkabine 10 tragende Fahrwerk 12. Das Fahrwerk 12 kann in der Art eines Räder- oder Kettenfahrwerkes ausgebildet sein und kann über eine eigenständige Federungs- und Dämpfungseinrichtung verfügen, was jedoch im Hinblick auf die noch vorzustellende Wankstabilisierung nicht zwingend notwendig wäre. Die Fahrerkabine 10 ist auf gegenüberliegenden Seiten, bezogen auf ihren symmetrischen kastenförmigen Aufbau, von zwei Arbeitszylindern 14, 16 als Federungszylinder getragen, die sich mit ihrer Längsausrichtung zwischen der Unterseite der Kabine 10 und der Oberseite des Fahrwerks 12 erstrecken. Anstelle einer an sich geschlossenen Fahrerkabine 10 kann diese auch offen ausgestaltet sein oder in der Art einer nicht näher dargestellten Plattform, auf dem die Bedienperson sitzend oder stehend den Betrieb der fahrbaren Arbeitsmaschine veranlaßt. Letztere kann eine Landmaschine sein, wie ein Traktor oder eine Erntemaschine oder sie kann im Straßen- und Bergbau eingesetzt werden, wobei Kettenfahrzeuge auch in Form gepanzerter Fahrzeuge für militärische Anwendungen für die noch zu erläuternde Wankstabilisierung einsetzbar sind. Anstelle der beiden gezeigten Arbeitszylinder 14, 16 können auch noch weitere vergleichbare Arbeitszylinder eingesetzt sein, beispielsweise vier Stück die im Eckbereich der Fahrerkabine 10 jeweils angeordnet werden können. Der einfacheren Darstellung und der Erläuterung wegen wird jedoch die vorliegende wankstabilisierte Kabinenfederung anhand der beiden gezeigten Arbeitszylinder 14, 16 näher erläutert.

Die beiden Arbeitszylinder 14, 16 sind sowohl auf ihren Stangenseiten 18 bzw. 20 als auch auf ihren beiden Kolbenseiten 22 bzw. 24 fluidführend mit einer Schalteinrichtung 26 verbunden, die vorzugsweise in der Art eines 4/2-Wege-Ventiles ausgebildet ist. In der in der Figur gezeigten Schalt- oder Neutralstellung der Schalteinrichtung 26 verbindet diese kreuzweise über ihre Ein- und Ausgänge 1 bis 4 die Kolbenseite 24 des Arbeitszylinders 16 mit der Stangenseite 18 des Arbeitszylinders 14 und dessen Kolbenseite 22 mit der Stangenseite 20 des Arbeitszylinders 16. Bei der vorliegenden Erläuterung der Erfindung werden die Begriffe "Seite" und "Raum" synonym verwendet, dass heißt der Begriff Stangenseite steht auch für den Begriff Stangenraum und der Begriff Kolbenseite für die Angabe Kolbenraum. Die in der Figur gezeigte Schaltstellung der Schalteinrichtung 26 entspricht der Neutralstellung der noch näher aufzuzeigenden Wankstabilisierung für die Kabine 10, wobei in die Verbindungsleitung zwischen den Kolbenräumen 22, 24 eines jeden Arbeitszylinders 14, 16 je ein zuordenbarer Hydrospeicher 28 geschaltet ist. Ein dahingehender Hydrospeicher 28, der als Energiespeicher dient, kann beispielsweise in der Art eines Membranspeichers oder dergleichen ausgebildet sein.

Neben der Schalteinrichtung 26 ist in einem Block 30 zusammengefaßt eine weitere Schalteinrichtung 32 als Ganzes vorhanden, mit vier weiteren Ventilen 34, 36, 38 und 40, die bis auf das Ventil 38 vorzugsweise in der Form von 2/2-Wege-Schaltventilen ausgebildet sind. Der Eingang 3 des dritten Ventiles 38 ist an eine Druckversorgung P angeschlossen und der weitere Eingang 1 an einen Tankanschluß T, der über eine Abzweigleitung auch an den Eingang 1 des vierten Ventiles 40 angeschlossen ist. Das als 3/2-Wege-Ventil ausgebildete dritte Ventil 38 ist darüber hinaus an seinem Ausgang 2 an eine Load-Sensing-Leitung LS angeschlossen.

Des weiteren mündet der dahingehende Ausgang 2 des Ventiles 38 in eine Verbindungsleitung, in dem zwei federbelastete Rückschlagventile 42 angeordnet sind, die von ihrer Wirkrichtung her federbelastet aufeinander zugewandt in ihrer Schließstellung gehalten sind, in dem das Schließteil des jeweiligen Rückschlagventiles 42 auf den Ausgang 2 des Ventiles 38 zuweist. Hierzu parallel verschaltet, sind in einer weiteren Verbindungsleitung zwei weitere Rückschlagventile 44 vorhanden, die federbelastet ihr Schließteil in Richtung der Schließstellung zu halten suchen, das von der Zuleitung abgewandt ist, die zu dem Ausgang 2 des Ventiles 40 führt. Ferner sind die jeweiligen Rückschlagventile 42, 44 zum einen an den Eingang 1 des Ventiles 34 angeschlossen, sowie an den Eingang 1 des Ventiles 36. Die jeweiligen Ausgänge 2 von erstem Ventil 34 und zweitem Ventil 36 münden in eine Verbindungsleitung zwischen dem Stangenraum 18 und der Schalteinrichtung 26, sowie zwischen dem Stangenraum 20 und der genannten Schalteinrichtung 26, bezogen auf die mit 2 bzw. 3 gekennzeichneten Anschlüsse des dahingehenden 4/2-Wege-Ventiles. Die Kolbenräume 22 und 24 sind wiederum an die Anschlüsse 4 bzw. 1 der Schalteinrichtung 26 angeschlossen.

Alle genannten Ventile sind mit einer Steuereinrichtung 46 (Controller) verbunden, wobei die Steuereinrichtung 46 neben dem Ansteuern der Ventile auf der Eingangsseite an Sensoren 48 angeschlossen ist, die zumindest die Neigungsstellung der Kabine 10 in der Fahrlängsrichtung des Fahrzeuges erfassen. Die dahingehenden Sensoren 48 können weitere Betriebsgrößen erfassen wie Fahrgeschwindigkeit, Fahrbeschleunigungen, alle Arten von Nick-, Wank- und/oder Gierbewegungen, sowie Lenkeinschlag, Last und Bodenbeschaffenheit.

Der besseren Erläuterung wegen wird im Folgenden die erfindungsgemäße Lösung anhand ihrer Funktion näher erläutert. Mit der zu erläuternden Funktion soll sichergestellt werden, dass die Fahrerkabine 10 einer selbstfahrenden Arbeitsmaschine hydraulisch gefedert ist, wobei sich dabei die Kabine 10 nur auf- und abbewegen soll und keine den Ablauf störende Wankbewegungen ausführt. Ferner soll es in Fortgestaltung der erfindungsgemäßen Lösung möglich sein, die Kabine 10 definiert zu neigen, beispielsweise um den Einsichtbereich der Bedienperson im Arbeitsbetrieb der Maschine zu verbessern. Auch bei geneigter Kabine 10 soll diese ebenfalls auf- und abfedern können und eine mögliche Wankbewegung soll unterdrückt sein.

In der Neutralstellung wie sie die Figur wiedergibt, stehen die Zylinder 14, 16 in Mittelstellung und die Kabine 10 steht waagrecht. An jeden Kolbenraum 22, 24 ist ein Hydrospeicher 28 angeschlossen und das Ventil der Schalteinrichtung 26 verbindet jeweils den Kolbenraum 22 des einen Zylinders 14 mit dem Stangenraum 20 des anderen Zylinders 16 und umgekehrt. Die Ventile 34 und 36 sind geschlossen und durch die aufgezeigte Kreuzschaltung der Schalteinrichtung 26 können die Federungszylinder 14, 16 nur synchron ein- und ausfedern unter dem Einfluß der beiden Hydrospeicher 28, wobei die derart gefederte Kabine wankstabilisiert ist.

Um nun das Niveau der Kabine 10 einstellen zu können und um diese gegebenenfalls zu neigen, wird das Ventil der Schalteinrichtung 26 geschaltet mit der Folge, dass nunmehr voneinander getrennt die Kolbenräume 22, 24 mit den jeweils zuordenbaren Stangenräumen 18, 20 eines jeden Arbeitszylinders 14, 16 fluidführend miteinander verbunden sind und die beiden Zylinder 14, 16 selbst sind hydraulisch voneinander getrennt. Durch entsprechendes Ansteuern der Ventile 34 und 40 bzw. 36 und 40 können die Zylinder 14, 16 unabhängig voneinander eingefahren werden und durch Betätigen der Ventile 34 und 38 bzw. 36 und 38 sind die beiden Arbeitszylinder 14, 16 unabhängig voneinander ausfahrbar, wobei die dahingehende Ansteuerung bedienerseitig ausgelöst über die Steuereinrichtung 46 als Controller der Maschine erfolgt. Ferner erfolgt das Ausfahren bedingt durch die gegenüber der jeweiligen Stangenseite vergrößerten Kolbenflächen des jeweiligen Arbeitszylinders 14, 16, wo bei gleichem Druck im System dann jeweils die größere Kraft herrscht, die den Ausfahrvorgang bewerkstelligt. Auf diese Art und Weise kann die Kabine 10 aber nicht nur in der Höhe eingestellt werden, sondern auch seitlich geneigt werden, je nachdem welcher Zylinder 14 oder 16 mehr oder weniger mit Fluid von der Pumpeneinrichtung P her versorgt wird, und die entsprechende verdrängte Menge über den Tankanschluß T abgeführt ist. Nach dem genannten Einstellvorgang wird das Ventil der Schalteinrichtung 26 wiederum in die Neutralstellung gebracht, und die bereits aufgezeigte Kreuzschaltung ermöglicht erneut eine wankstabilisierte Kabinenfederung auch bei geneigter Kabine 10.

## Patentansprüche

1. Fahrbare Arbeitsmaschine, wie ein Traktor, mit einer Fahrerkabine (10), die mittels Kolbenraum und Stangenraum aufweisenden Arbeitszylinder (14, 16) und Hydrospeicher (28) gegenüber einem Fahrwerk (12) hydraulisch gefedert ist, **dadurch gekennzeichnet, dass** eine Schalteinrichtung (26) in ihrer einen Schaltstellung den Kolbenraum (22) eines Zylinders (14) mit dem Stangenraum (20) eines anderen Zylinders (16) und umgekehrt fluidführend verbindet, und in ihrer anderen Schaltstellung eine fluidführende Verbindung zwischen dem Kolbenraum (22; 24) eines Zylinders (14; 16) mit seinem Stangenraum (18; 20) herstellt.

2. Fahrbare Arbeitsmaschine nach Anspruch 1, **dadurch gekennzeichnet, dass** die Schalteinrichtung (26) mindestens ein Ventil aufweist und an eine weitere Schalteinrichtung (32) angeschlossen ist, die mindestens vier weitere Ventile (34, 36, 38, 40) aufweist, die paarweise zu Funktionsgruppen zusammengefaßt, dem voneinander unabhängigen Ein- und Ausfahren der Arbeitszylinder (14, 16) dienen.

3. Fahrbare Arbeitsmaschine nach Anspruch 2, **dadurch gekennzeichnet, dass** mittels einer Steuereinrichtung (46) Meldungen von Sensoren (48) erfassbar und verarbeitbar sind, die zu Steuersignalen für die einzelnen Schalteinrichtungen (26, 32) führen.

4. Fahrbare Arbeitsmaschine nach Anspruch 2 oder 3, **dadurch gekennzeichnet, dass** das Ventil der Schalteinrichtung (26) ein 4/2-Wege-Ventil ist, und die vier weiteren Ventile der weiteren Schalteinrichtung (32) zumindest teilweise als 2/2-Wege-Ventile ausgebildet sind.

5. Fahrbare Arbeitsmaschine nach einem der Ansprüche 1 bis 4, **dadurch gekennzeichnet, dass** die Kolbenräume (22, 24) der Arbeitszylinder (14, 16) jeweils mit einem Hydrospeicher (28) versehen sind.

6. Fahrbare Arbeitsmaschine nach einem der Ansprüche 2 bis 5, **dadurch gekennzeichnet, dass** zwischen den Ventilen (34, 36, 38, 40) der weiteren Schalteinrichtung (32) Rückschlagventile (42, 44) angeordnet sind, die paarweise einander zugeordnet, dieselbe Wirkrichtung haben.

7. Fahrbare Arbeitsmaschine nach einem der Ansprüche 3 bis 6, **dadurch gekennzeichnet, dass** die Sensoren (48) Betriebsgrößen erfassen, wie Fahrgeschwindigkeit, Fahrbeschleunigungen, Nick-, Wank- und/oder Gierbewegungen, Lenkeinschlag, Last und Bodenbeschaffenheit.

8. Fahrbare Arbeitsmaschine nach einem der Ansprüche 2 bis 7, **dadurch gekennzeichnet, dass** die Ventile (34,36) als Sitzventile ausgebildet sind und leckfrei absperren.

## Claims

1. Driveable working machine such as a tractor, with a drivers cabin (10) hydraulically suspended against a chassis (12) by means of a working cylinder (14, 16) comprising a piston chamber and a rod chamber and a hydro store (28), **characterised in that** a switching means (26) connects the piston chamber (22) of a cylinder (14) with the rod chamber (20) of another cylinder (16) and vice versa in a fluid conveying way in one switching position, and creates a fluid conveying connection between the piston chamber (22; 24) of a cylinder (14, 16) and its rod chamber (18; 20) in the other switching position.

2. Driveable working machine according to Claim 1, **characterised in that** the switching means (26) comprises at least one valve, and is connected to a further switching means (32) comprising at least four further valves (34, 36, 38, 40) grouped into functional pairs, serving the independent extension and retraction of the working cylinders (14,16).

3. Driveable working machine according to Claim 2, **characterised in that** signals from sensors (48) can be recorded and processed by means of a control means (46), which result in control signals for the individual switching means (26, 32).

4. Driveable working machine according to Claim 2 or 3, **characterised in that** the valve of the switching means (26) is a 4/2-way valve, and the four further valves of the further switching means (32) are 2/2-way valves at least in part.

5. Driveable working machine according to one of the Claims 1 to 4, **characterised in that** the piston chambers (22, 24) of the working cylinder (14, 16) are each equipped with a hydro store (28).

6. Driveable working machine according to one of the Claims 2 to 5, **characterised in that** non-return valves (42, 44) arranged in pairs with the same effective direction are located between the valves (34, 36, 38, 40) of the further switching means (32).

7. Driveable working machine according to one of the Claims 3 to 6, **characterised in that** the sensors (48) record operating parameters such as the driving speed, acceleration, nodding, swaying and/or tilting movements, steering angle, load and terrain conditions.

8. Driveable working machine according to one of the Claims 2 to 7, **characterised in that** the valves (34, 36) take the form of seat valves, which block in a leak-free way.

## Revendications

1. Machine de travail itinérante, comme un tracteur, ayant une cabine (10) de conducteur, qui est suspendue hydrauliquement par rapport à un châssis (12) au moyen d'un hydroaccumulateur (28) et d'un vérin (14, 16) de travail ayant une chambre de piston et une chambre de tige, **caractérisée en ce qu'**un dispositif (26) de commutation, met en communication fluidique, dans l'une de ses positions de commutation la chambre (22) de piston d'un vérin (14) avec la chambre (20) de tige d'un autre piston (16) et, dans son autre position de commutation, ménage une communication fluidique entre la chambre (22, 24) de piston d'un vérin (14, 16) et sa chambre (18,20) de tige.

2. Machine de travail itinérante suivant la revendication 1, **caractérisée en ce que** le dispositif (26) de commutation a au moins une vanne et est raccordé à un autre dispositif (32) de commutation, qui a au moins quatre autres vannes (34, 36, 38, 40) rassemblées par paire en groupes de fonctionnement qui servent, indépendamment les uns des autres, à rentrer et à déployer le vérin (14, 16) de travail.

3. Machine de travail itinérante suivant la revendication 2 **caractérisée en ce que**, au moyen d'un dispositif (46) de commande, des indications de capteurs (48) peuvent être relevées et traitées, et donnent des signaux de commande des dispositifs (26, 32) de commutation.

4. Machine de travail itinérante suivant la revendication 2 ou 3, **caractérisée en ce que** la vanne du dispositif (26) de commutation est une vanne à 4/2 voies et les quatre autres vannes de l'autre dispositif (32) de commutation sont au moins en partie des vannes à 2/2 voies.

5. Machine de travail itinérante suivant l'une des revendications 1 à 4, **caractérisée en ce que** les chambre (22, 24) de piston des vérins (14, 16) de travail sont munis respectivement d'un hydroaccumulateur (28).

6. Machine de travail itinérante suivant l'une des revendications 2 à 5, **caractérisée en ce qu'**entre les vannes (34, 36, 38, 40) de l'autre dispositif (32) de commutation sont montés des clapets antiretour (42, 44) qui sont associés les uns aux autres par paire et qui ont un effet de même sens.

7. Machine de travail itinérante suivant l'une des revendications 3 à 6, **caractérisée en ce que** les capteurs (48) relèvent des grandeurs de fonctionnement comme la vitesse de déplacement, des accélérations de déplacement, des mouvements de tangage, de roulis et/ou de lacet, de braquage de roues, de charge et de nature du sol.

8. Machine de travail itinérante suivant l'une des revendications 2 à 7, **caractérisée en ce que** les vannes (34, 36) sont constituées sous la forme de vannes à siège et ferment sans fuite.
